# EUROPEAN PATENT SPECIFICATION

(11) **EP 2 014 496 B1**
(45) Date of publication and mention of the grant of the patent: **18.05.2011**
(21) Application number: 08010683.4
(22) Date of filing: 12.06.2008
(51) Int. Cl.: B60J 7/00

(54) **Automotive sunshade and guide track system**
Autosonnenblende und Führungsschienensystem
Pare-soleil pour automobile et système de rail de guidage

(30) Priority: 09.07.2007 US 774849
(43) Date of publication of application: 14.01.2009
(73) Proprietor: Webasto AG, 82131 Stockdorf (DE)
(72) Inventor: Marx, Craig, Washington, MI 48094 (US); Murray, Thomas, Columbiaville, MI 48421 (US); Racine, George, Shelby Township, MI 48316 (US); Buschell, Sam, Clawson, MI 48017 (US)
(74) Representative: advotec.

(56) References cited:
- DE-B- 1 157 495
- DE-U1-202004 007 359
- US-A- 3 691 686
- US-A- 5 845 959
- US-B1- 6 729 074

## Description

### FIELD

This document relates to an automotive sunshade panel and guide track system therefor and, more particularly, to an automotive sunshade panel and guide track system for use in conjunction with a sunroof.

### BACKGROUND

Automobiles are often provided with a sunroof that is fixed or positionable within a ceiling portion of a vehicle body to enhance passenger comfort. A rigid, glass or plastic panel is used to close-off the opening in the roof, as desired. To reduce the sun load within the vehicle, a sunshade is typically provided that forms part of the headliner. The sunshade can be selectively closed to block off the opening to reduce or eliminate sunlight coming in through the sunroof panel.

Purchasers of today's automobiles demand an ever increasing level of quality, particularly in the area of fit and finish. Those buyers who purchase an optional sunroof demand an easy to operate device that includes a sunshade having a look and feel of quality. The sunshade must be smoothly positionable and remain in whatever position it is placed, despite sudden movements of the vehicle. To achieve these ends, a certain amount of friction should occur between the lateral edges of the sunshade and the guide tracks.

In one sunshade assembly design, the lateral edges of the sunshade are provided with slide shoes that are slideably mounted within the guide tracks. A problem with this assembly design is that small dimensional variations in the slide shoes may yield large variations in the frictional force required to open and close the sunshade.

U.S. Patent No. 3,691,686 proposes a window shade assembly including a curved shade frame and shroud in which a resilient shade having a curvature differing from that of the frame is installed. The shade has frictional means along the edges thereof to engage the frame and to enable restricted sliding motion therebetween.

U.S. Patent No. 5,845,959 proposes a slide tilt roof apparatus wherein a rise/fall retaining portion is provided on a member which is longitudinally movable following the movement of the corresponding lifter so that the engagement portion at the rear end of the rising/falling link can be guided when the rising/falling link forwardly tilt pivots and also when the link pivots to erect, whereby the posture of the rising/falling link can be changed by a single member. A substantially flat sunshade is proposed as part of the apparatus, which is slideably positioned within a sunshade guide groove. The edges of the sunshade are provided with three tabs spaced along each edge and slideably mounted within the guide groove. Slide shoes are not used in the proposed design.

U.S. Patent No. 6,729,074 proposes an assembly having two opposing parallel guides and a panel having two opposite parallel lateral edges said to cooperate with the guides for a frictional sliding movement of the panel relative to the guides. The edges of the panel are curved and provided with three tabs spaced along the edges, such that three contact points are provided between each edge and the corresponding guide. As proposed, each contact point engages only one of the guide surfaces of the corresponding guide. As proposed, two contact points are provided near the ends of each edge and there is also provided an intermediate contact point. The assembly is said to have utility in an open roof assembly for a vehicle.

It may be noted that the assembly proposed in U.S. Patent No. 6,729,074, by providing contact points that only minimally engage one of the two guide surfaces of each corresponding guide, may yield an assembly that has an ever decreasing frictional force over the life of the vehicle.

Document DE 20 2004 007 359 U1 discloses a sunshade assembly according to the preamble of claim 1.

As such, despite the advances in the art, there remains a need for an improved automotive sunshade panel and guide track system therefor.

### SUMMARY

In one aspect, provided is a sunshade assembly. The sunshade assembly includes a frame, the frame having a pair of opposing guide tracks, each guide track having a pair of spaced parallel guide surfaces, a sunshade panel having a forward portion, a rearward portion and a pair of curved lateral edges, and a plurality of guide tabs extending outwardly from each of the pair of curved lateral edges and positioned along a radius of curvature for placement within the pair of opposing guide tracks, at least one of the guide tabs of each curved lateral edge positioned within the forward portion of the sunshade panel and at least one of the guide tabs of each curved lateral edge positioned within the rearward portion of the sunshade panel, wherein the at least one guide tab positioned within the forward portion of the sunshade panel and the at least one guide tab positioned within the rearward portion of the sunshade panel are each of a length sufficient to contact each parallel guide surface of the pair of spaced parallel guide surfaces to provide a frictional slideable fit within the pair of opposing guide tracks.

In another aspect, provided is a sunshade panel for use in an assembly having a pair of opposing guide tracks, each guide track having a pair of spaced parallel guide surfaces. The sunshade panel includes a forward portion, a rearward portion and a pair of curved lateral edges, and a plurality of guide tabs extending outwardly from each of the pair of curved lateral edges and positioned along a radius of curvature for placement within the pair of opposing guide tracks, at least one of the guide tabs of each curved lateral edge positioned within the forward portion of the sunshade panel and at least one of the guide tabs of each curved lateral edge positioned within the rearward portion of the sunshade panel, wherein the at least one guide tab positioned within the forward portion of the sunshade panel and the at least one guide tab positioned within the rearward portion of the sunshade panel are each of a length sufficient to contact each parallel guide surface of the pair of spaced parallel guide surfaces to provide a frictional slideable fit within the pair of opposing guide tracks.

According to the invention, the plurality of guide tabs of each curved lateral edge includes a third guide tab positioned along a radius of curvature. The third guide tab may be positioned between the at least one guide tab positioned within the forward portion of the sunshade panel and the at least one guide tab positioned within the rearward portion of the sunshade panel.

In another form, the third guide tab of the plurality of guide tabs of each curved lateral edge is of a thickness sufficient to contact each parallel guide surface of the pair of spaced parallel guide surfaces to provide a frictional slideable fit within the pair of opposing guide tracks. This provides a further enhancement in the frictional sliding movement of the sunshade panel relative to the guide tracks.

According to the invention, to further enhance resiliency and the frictional sliding movement of the sunshade panel relative to the guide tracks, relief cuts are provided within the at least one guide tab positioned within the forward portion of the sunshade panel and the at least one guide tab positioned within the rearward portion of the sunshade panel along portions of the curved lateral edge.

In still yet another form, only the respective edges of the sunshade panel are curved, although it is also contemplated that the sunshade panel is curved.

The sunshade assemblies disclosed herein can be used in conjunction with a sunroof assembly for a vehicle having a roof opening defined in the fixed roof of the vehicle.

In a further form, a sunshade panel is provided having a substrate manufactured from a glass-reinforced composite material with a foam layer covered on one side by a cloth.

In a still further form, the sunshade panel is manufactured from a composite material such as glass-filled polypropylene.

These and other features will be apparent from the detailed description taken with reference to the accompanying drawings.

### BRIEF DESCRIPTION OF THE DRAWINGS

Further explanation may be achieved by reference to the description that follows and the drawings illustrating, by way of non-limiting examples, various forms, wherein:
FIG. 1 is an exploded perspective view of a sunroof assembly having a sunshade assembly of the type disclosed herein;
FIG. 2 is a plan view of the sunshade panel of the sunshade assembly of FIG. 1;
FIG. 2A is an enlarged view of a portion of the guide tab identified as 2A in FIG. 2;
FIG. 3 is an end view of the sunshade panel of the sunshade assembly of FIG. 1;
FIG. 4 shows, in a cross section taken through a curved lateral edge of the sunshade panel of the sunshade assembly of FIG. 1, the guide tabs for engagement with a frame having a pair of opposing guide tracks;
FIG. 5 is an end view of the sunshade panel of the sunshade assembly of FIG. 1 shown in an "as installed" condition;
FIG. 6 shows, in a cross section taken through a guide tab positioned within the forward portion of the sunshade panel, the cooperation between the guide tab of the sunshade panel and a guide track;
FIG. 7 shows, in a cross section taken through a middle guide tab, the cooperation between the middle guide tab of the sunshade panel and a guide track; and
FIG. 8 shows, in a cross section taken through the lateral edge of the sunshade panel of the sunshade assembly of FIG. 1, the guide tabs in an "as installed" condition.

### DETAILED DESCRIPTION

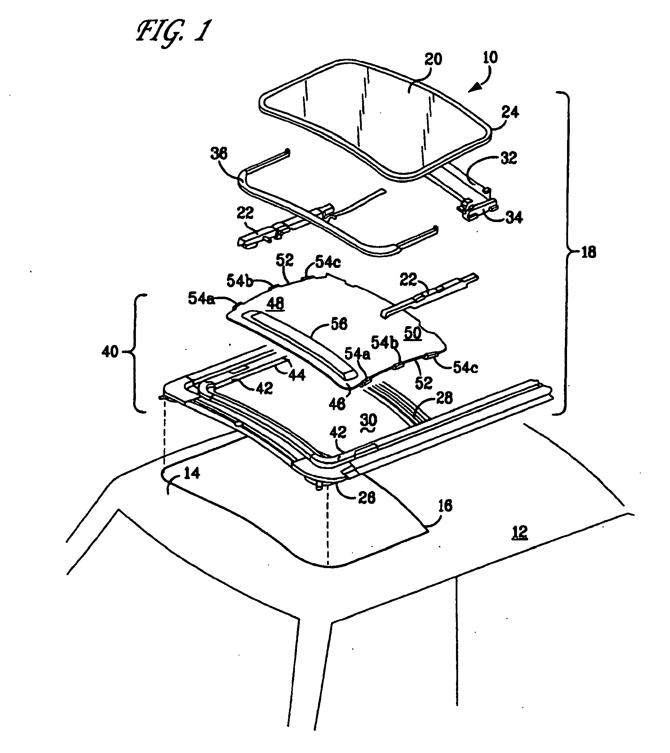

Various aspects will now be described with reference to specific forms selected for purposes of illustration. Moreover, it is to be noted that the figures provided herein are not drawn to any particular proportion or scale, and that many variations can be made to the illustrated forms. Reference is now made to FIGS. 1-8, wherein like numerals are used to designate like elements throughout.

Referring to FIG. 1, there is schematically shown a sunroof assembly 10 for a vehicle 12. A roof opening 14 is defined in a fixed roof 16 of vehicle 12 and a slide/tilt roof apparatus 18 for mounting on roof 16 of vehicle 12 is provided. Slide/tilt roof apparatus 18 is capable of changing the state of roof opening 14 from a closed state, to a vented state, to a fully opened state, through the use of panel 20. The slide/tilt roof apparatus 18 operates in a manner well-known known, with lifters 22 extending along in the direction of movement of the vehicle.

The panel 20 may be formed of a transparent or colored glass or plastic, a metal plate or the like, and is fixedly attached with a metal frame (not shown) on a marginal portion of the inner face thereof and with a weather strip 24 on the outer periphery thereof. Lifters 22 projecting downward are mounted to each of the right and left sides of a frame 26.

Frame 26 is secured below the roof 16 and is substantially U-shaped in plan having right and left side portions and a front portion. A connection plate 24 is secured to a longitudinally intermediate portion of the frame 26. The space enclosed by the connection plate 28 and the front portion of the frame 26 forms an inner opening portion 30.

A drip rail 32 may also be provided, the opposite ends of which are connected to support members 34, respectively. Each of these support members 34 is longitudinally slidably supported by a shoe guide (not shown) and is operatively connected to the lifters 22, thereby permitting vertical movements of the lifters 22.

A deflector 36 may also be provided that is capable of projecting upward from the opening portion 30 when the panel 20 is opened. Other details of the operation of sunroof assembly 10 may be found in U.S. Patent No. 5,845,959.

Still referring to FIG. 1, sunroof assembly 10 is provided with a sunshade assembly 40. The sunshade assembly includes frame 26, frame 26 having a pair of opposing guide tracks 42, each guide track 42 having a pair of spaced parallel guide surfaces 44.

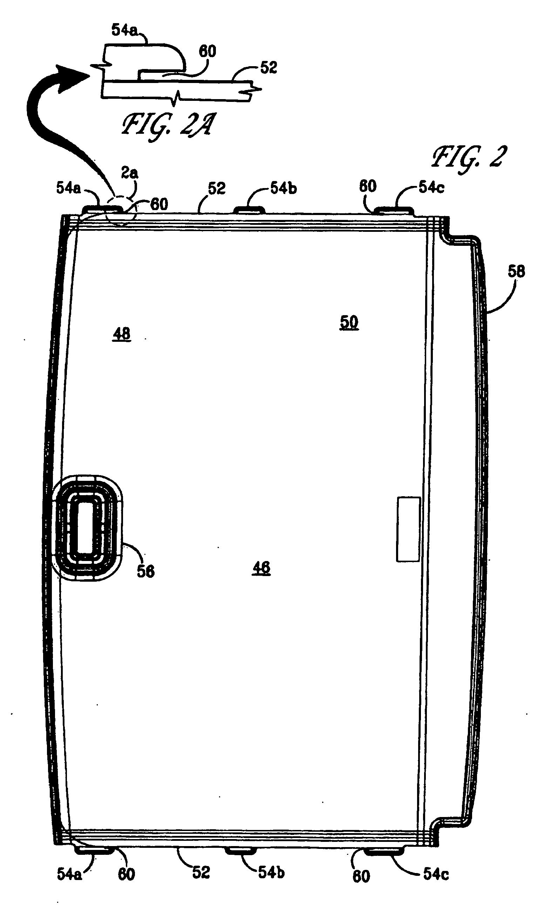

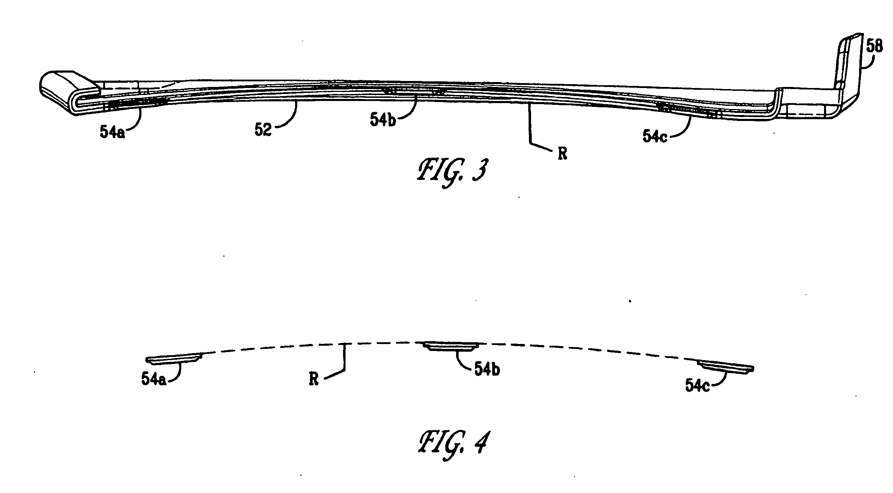

Referring also to FIGS. 2 and 3, a sunshade panel 46 having a forward portion 48, a rearward portion 50 and a pair of curved lateral edges 52 is also provided. Sunshade panel 46 also includes a plurality of guide tabs 54(a-c) extending outwardly from each of the pair of curved lateral edges 52 and positioned along a radius of curvature R, for placement within the pair of opposing guide tracks 42. As shown, at least one of the guide tabs 54a of each curved lateral edge 52 may be positioned within the forward portion 48 of the sunshade panel 46 and at least one of the guide tabs 54c of each curved lateral edge 52 may be positioned within the rearward portion 50 of the sunshade panel 46.

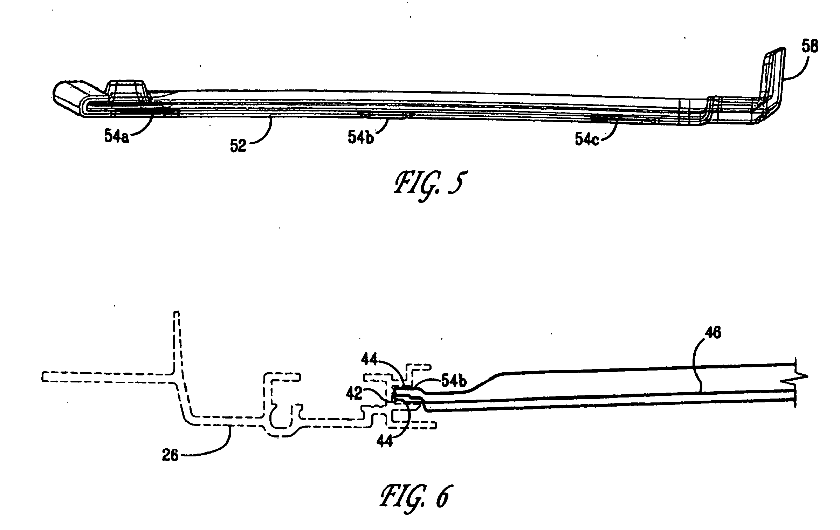

As may be best seen by reference to FIG. 6, the at least one guide tab 54a, positioned within the forward portion 48 of the sunshade panel 46, and the at least one guide tab 54c, positioned within the rearward portion 50 of the sunshade panel 46, are each of a length sufficient to contact each parallel guide surface 44 of the pair of spaced parallel guide surfaces 44, to provide a frictional slideable fit within the pair of opposing guide tracks 42. By engaging each of the two guide surfaces 44 of each corresponding guide track 42, a more stable frictional force is provided over the life of the vehicle when a driver of the vehicle manually positions sunshade panel 46 through the use of handle 56. Moreover, the sunshade assemblies disclosed herein reduce the influence of dimensional variations on the resultant frictional forces.

According to the invention, the plurality of guide tabs 54(a-c) of each curved lateral edge 52 includes a third guide tab 54b, which is positioned along radius of curvature R, as may be seen in FIGS. 3 and 4. As also shown in FIGS. 1 and 2, the third guide tab 54b is positioned between the at least one guide tab positioned within the forward portion of the sunshade panel 54a and the at least one guide tab positioned within the rearward portion of the sunshade panel 54c.

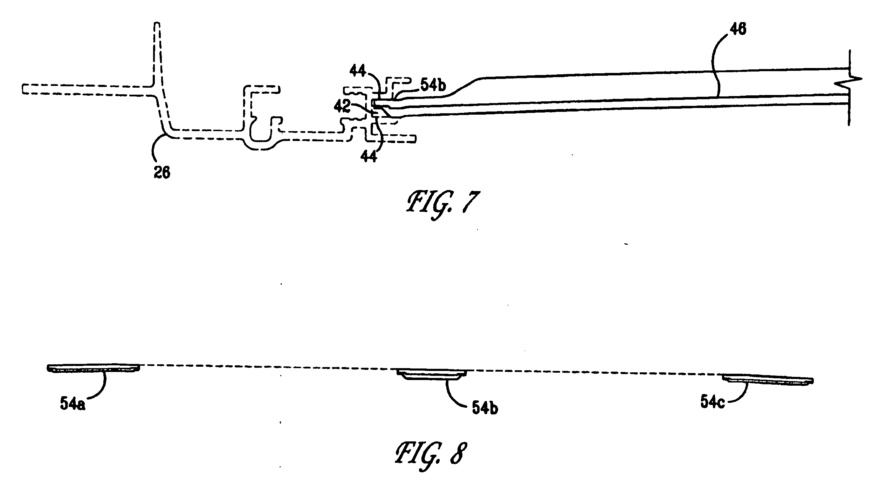

As may be seen in FIG 7, in yet another form, the third guide tab 54b of the plurality of guide tabs of each curved lateral edge 52 is of a thickness sufficient to contact each parallel guide surface 44 of the pair of spaced parallel guide surfaces 44 to provide a frictional slideable fit within the pair of opposing guide tracks 42. This provides a further enhancement in the frictional sliding movement of the sunshade panel 46 relative to the guide tracks 42, when a driver of vehicle 12 manually engages a handle 56 of sunshade panel 46.

As may be appreciated by those skilled in the art, the plurality of guide tabs 54(a-c) can be formed in any of several ways. For example, the guide tabs 54(a-c) can comprise extensions of or projections from the respective curved lateral edges 52 of sunshade panel 46, attached thereto in any appropriate manner, or the guide tabs 54(a-c) may be the result of the provision of recesses in the respective curved lateral edges 52.

As shown in FIGS. 2 and 2A, to further enhance resiliency and the frictional sliding movement of the sunshade panel 46 relative to the guide tracks 42, relief cuts 60 are provided within the at least one guide tab 54a positioned within the forward portion 48 of the sunshade panel 46 and the at least one guide tab 54c positioned within the rearward portion 50 of the sunshade panel 46 along portions of the curved lateral edge 52.

Referring to FIGS. 3, 6 and 7, sunshade panel 46 may be seen to have a thickness which, at least in its edge region, is substantially similar to the thickness of the plurality of guide tabs 54(a-c). Further, as shown in FIGS. 1-3, in addition to curved lateral edge 52, the sunshade panel itself 46 may be curved. In this form, the shape of the edge of the sunshade panel 46 and its inherent resiliency serve to enhance the frictional sliding movement of the sunshade panel 46 relative to the guide tracks 42.

As shown in FIG. 1, in one form, each opposing guide track 42 of frame 26 is substantially straight. However, as may be appreciated, roof designs vary from vehicle to vehicle. In those vehicle designs having curved rooflines, the pair of opposing guide tracks 42 may be substantially curved along a radius of curvature. In this form, the radius of curvature of the pair of opposing guide tracks 42 is greater than the radius of curvature of the plurality of guide tabs 54(a-c) of the pair of curved lateral edges 52.

Referring now to FIGS. 5-8, side views are shown of sunshade panel 46 in the installed condition. As may be appreciated, in these views, sunshade panel 46 is installed in a frame 26 in which opposing guide tracks 42 are substantially straight.

While in the illustrated forms, sunshade panel 46 is curved in its entirety, it also envisioned and within the scope of this disclosure that sunshade panel 26 may be substantially flat. In this form, nevertheless, a pair of curved lateral edges 52 is provided together with a plurality of guide tabs 54(a-c) extending outwardly from each of the pair of curved lateral edges 52. The plurality of guide tabs 54(a-c) are positioned along a radius of curvature R for placement within the pair of opposing guide tracks 42, at least one of the guide tabs 54a of each curved lateral edge 52 positioned within the forward portion 48 of the sunshade panel 46 and at least one of the guide tabs 54c of each curved lateral edge 52 positioned within the rearward portion 50 of the sunshade panel 46.

In the production of sunshade panel 46, a panel substrate may be first manufactured from a suitable thermoplastic material. To the panel substrate, a foam layer (not shown) and a cloth layer (not shown) can be applied to the surface that will face the interior of the vehicle, as is conventional. Sunshade panel 46 may be produced by conventional thermoforming or compression molding, as desired.

A broad range of thermoplastic resins, whether crystalline or amorphous, can be utilized. Examples of crystalline polymers include polyolefins, polyamides, polyesters, polyaryletherketones, polyoxy-methylene polymers, etc. Examples of amorphous polymers include polycarbonates, acrylics, polystyrenes, etc. Copolymers such as styrene-acrylonitriles and terpolymers such as acrylonitrile-styrene-acrylic and acrylonitrile-butadiene-styrene can also be used. Also, alloys and blends of various thermoplastics described above can be used herein.

Thermoplastic resins utilized herein should have good flow properties for ease of processing and structural integrity. To obtain higher stiffness and higher heat distortion temperature, the thermoplastic material may be reinforced with one or more reinforcing agents. Common reinforcing agents include fibrous materials such as glass fibers, polymeric fibers and natural fibers such as jute, and minerals such as mica and talc. One reinforcing agent having utility herein is glass fiber with a 10-20 micron diameter and a 3-4 mm length. Longer glass fibers of about 12 mm in length can also be used to further improve the properties of the thermoplastic material. In one form, the composite material is a high performance thermoplastic material such as glass-filled polypropylene.

In another form, the composite material is a high performance thermoplastic material such as AZDEL^{®}, available from AZDEL, Inc. of Forest, Virginia. These materials come in two forms, AZDEL SuperLite^{®}, a low pressure, thermoformable composite of polypropylene and long chopped fiber combined with outer layers as needed. It is available as a sheet product that may be thermoformed into shape and is used in applications where a high stiffness-to-weight ratio is required. It is available in densities from 600 grams per square meter (gsm) to 2000 gsm.

The other form is AZDEL Laminate^{®} GMT. AZDEL Laminate is a five layer composite of glass fiber and thermoplastic resin and is usually compression molded, although it may also be thermoformed using several industry standard methods of production.

The sunshade panels and assemblies disclosed herein produce frictional forces and slide forces that do not vary significantly with varying dimensions. Moreover, variations in the shape of the sunshade panel or its edges do not have a large influence on the resulting frictional forces. Thus, an assembly is provided in which the sunshade panel experiences a rather consistent slide force, leading to reproducible results.

While the illustrative embodiments disclosed herein have been described with particularity, it will be understood that various other modifications will be apparent to and can be readily made by those skilled in the art without departing from the scope of the disclosure. Accordingly, it is not intended that the scope of the claims appended hereto be limited to the examples set forth herein.

## Claims

1. A sunshade assembly comprising:
(a) a frame (26) having a pair of opposing guide tracks (42, 42), each guide track (42, 42) having a pair of spaced parallel guide surfaces (44, 44);
(b) a sunshade panel (46) having a forward portion (48), a rearward portion (50) and a pair of curved lateral edges (52, 52); and
(c) a plurality of guide tabs (54a, 54b, 54c) extending outwardly from each of said pair of curved lateral edges (52, 52) and positioned along a radius of curvature for placement within said pair of opposing guide tracks (42, 42), at least one of said guide tabs (54a, 54b, 54c) of each curved lateral edge positioned within said forward portion (48) of said sunshade panel (46) and at least one of said guide tabs (54a, 54c) of each curved lateral edge (52, 52) positioned within said rearward portion (50) of said sunshade panel (46);
wherein said at least one guide tab (54a, 54c) positioned within said forward portion (48) of said sunshade panel (46) and said at least one guide tab (54a, 54c) positioned within said rearward portion (50) of said sunshade panel (46) are each of a length sufficient to contact each parallel guide surface (44, 44) of said pair of spaced parallel guide surfaces (44, 44) to provide a frictional slideable fit within said pair of opposing guide tracks (42,42), **characterized in that** said plurality of guide tabs (54a, 54c) of each curved lateral edge (52, 52) further includes a third guide tab (54b) positioned along said radius of curvature and located between said at least one guide tab (54a, 54c) positioned within said forward portion (48) of said sunshade panel (46) and said at least one guide tab positioned within said rearward portion (50) of said sunshade panel (46), wherein said at least one guide tab (54a) positioned within said forward portion (48) of said sunshade panel (46) and said at least one guide tab (54c) positioned within said rearward portion (50) of said sunshade panel (46) are provided with a relief cut (60) along a portion of said curved lateral edge (52, 52), wherein said relief cuts (60) enhance resiliency and frictional sliding movement of said sunshade panel (46) relative to said guide tracks (42, 42).

2. The sunshade assembly of claim 1, wherein said third guide tab (54b) of said plurality of guide tabs (54a, 54b, 54c) of each curved lateral edge (52, 52) is of a thickness sufficient to contact each parallel guide surface of said pair of spaced parallel guide surfaces (44, 44).

3. The sunshade assembly of claim 1 or 2, wherein said rearward portion (50) of said sunshade panel (46) terminates in an upwardly extending edge.

4. The sunshade assembly of one of claims 1 to 3, wherein each of said pair of opposing guide tracks (42, 42) is substantially straight.

5. The sunshade assembly of one of claims 1 to 4, wherein each of said pair of opposing guide tracks (42, 42) is substantially curved along a radius of curvature.

6. The sunshade assembly of claim 5, wherein said radius of curvature of each of said pair of opposing guide tracks (42, 42) is greater than said radius of curvature of said plurality of guide tabs (54a, 54b, 54c) of each of said pair of curved lateral edges (52, 52).

7. The sunshade assembly of one of claims 1 to 6, wherein said sunshade panel (46) is manufactured from a material comprising a thermoplastic resin selected from polyolefins, polyamides, polyesters, polyaryletherketones, polyoxymethylene polymers and copolymers and terpolymers thereof.

8. The sunshade assembly of one of claims 1 to 6, wherein said sunshade panel (46) is manufactured from glass-filled polypropylene.

## Patentansprüche

1. Sonnenblendenanordnung mit:
(a) einem Rahmen (26) mit einem Paar gegenüberliegender Führungsschienen (42, 42), wobei jede Führungsschiene (42, 42) ein Paar beabstandeter paralleler Führungsflächen (44, 44) hat,
(b) einer Sonnenblendenplatte (46) mit einem vorderen Abschnitt (48), einem hinteren Abschnitt (50) und einem Paar gekrümmter Seitenränder (52, 52) und
(c) mehreren Führungslaschen (54a, 54b, 54c), die sich von jedem des Paars gekrümmter Seitenränder (52, 52) nach außen erstrecken und entlang einem Krümmungsradius positioniert sind, um in dem Paar gegenüberliegender Führungsschienen (42, 42) platziert zu werden, wobei mindestens eine der Führungslaschen (54a, 54b, 54c) jedes gekrümmten Seitenrands im vorderen Abschnitt (48) der Sonnenblendenplatte (46) positioniert ist und mindestens eine der Führungslaschen (54a, 54c) jedes gekrümmten Seitenrands (52, 52) im hinteren Abschnitt (50) der Sonnenblendenplatte (46) positioniert ist,
wobei die mindestens eine im vorderen Abschnitt (48) der Sonnenblendenplatte (46) positionierte Führungslasche (54a, 54c) und die mindestens eine im hinteren Abschnitt (50) der Sonnenblendenplatte (46) positionierte Führungslasche (54a, 54c) jeweils hinreichend lang sind, um jede parallele Führungsfläche (44, 44) des Paars beabstandeter paralleler Führungsflächen (44, 44) zu kontaktieren, um für eine gleitende Reibungspassung in dem Paar gegenüberliegender Führungsschienen (42, 42) zu sorgen, **dadurch gekennzeichnet, dass** die mehreren Führungslaschen (54a, 54c) jedes gekrümmten Seitenrands (52, 52) ferner eine dritte Führungslasche (54b) aufweisen, die entlang dem Krümmungsradius positioniert und zwischen der mindestens einen im vorderen Abschnitt (48) der Sonnenblendenplatte (46) positionierten Führungslasche (54a, 54c) und der mindestens einen im hinteren Abschnitt (50) der Sonnenblendenplatte (46) positionierten Führungslasche angeordnet ist, wobei die mindestens eine im vorderen Abschnitt (48) der Sonnenblendenplatte (46) positionierte Führungslasche (54a) und die mindestens eine im hinteren Abschnitt (50) der Sonnenblendenplatte (46) positionierte Führungslasche (54c) mit einer Freifräsung (60) entlang einem Abschnitt des gekrümmten Seitenrands (52, 52) versehen ist, wobei die Freifräsungen (60) Federung und Reibgleitbewegung der Sonnenblendenplatte (46) bezüglich der Führungsschienen (42, 42) verbessern.

2. Sonnenblendenanordnung nach Anspruch 1, wobei die dritte Führungslasche (54b) der mehreren Führungslaschen (54a, 54b, 54c) jedes gekrümmten Seitenrands (52, 52) hinreichend dick ist, dass sie jede parallele Führungsfläche des Paars beabstandeter paralleler Führungsflächen (44, 44) kontaktiert.

3. Sonnenblendenanordnung nach Anspruch 1 oder 2, wobei der hintere Abschnitt (50) der Sonnenblendenplatte (46) in einem sich nach oben erstreckenden Rand endet.

4. Sonnenblendenanordnung nach einem der Ansprüche 1 bis 3, wobei jede des Paars gegenüberliegender Führungsschienen (42, 42) im Wesentlichen gerade ist.

5. Sonnenblendenanordnung nach einem der Ansprüche 1 bis 4, wobei jede des Paars gegenüberliegender Führungsschienen (42, 42) im Wesentlichen entlang einem Krümmungsradius gekrümmt ist.

6. Sonnenblendenanordnung nach Anspruch 5, wobei der Krümmungsradius jeder des Paars gegenüberliegender Führungsschienen (42, 42) größer als der Krümmungsradius der mehreren Führungslaschen (54a, 54b, 54c) jedes des Paars gekrümmter Seitenränder (52, 52) ist.

7. Sonnenblendenanordnung nach einem der Ansprüche 1 bis 6, wobei die Sonnenblendenplatte (46) aus einem Material hergestellt ist, das ein thermoplastisches Harz umfasst, das aus Polyolefinen, Polyamiden, Polyestern, Polyaryletherketonen, Polyoxymethylenpolymeren und Copolymeren und Terpolymeren davon ausgewählt ist.

8. Sonnenblendenanordnung nach einem der Ansprüche 1 bis 6, wobei die Sonnenblendenplatte (46) aus glasgefülltem Polypropylen hergestellt ist.

## Revendications

1. Ensemble de pare-soleil, comprenant :
(a) un cadre (26) ayant une paire de rails de guidage opposés (42, 42), chaque rail de guidage (42, 42) ayant une paire de surfaces de guidage parallèles espacées (44, 44) ;
(b) panneau de pare-soleil (46) ayant une portion avant (48), une portion arrière (50) et une paire de bords latéraux courbes (52, 52) ; et
(c) une pluralité de languettes de guidage (54a, 54b, 54c) s'étendant vers l'extérieur depuis chacun de ladite paire de bords latéraux courbes (52, 52), et positionnées le long d'un rayon de courbure en vue de leur positionnement à l'intérieur de ladite paire de rails de guidage opposés (42, 42), au moins l'une desdites languettes de guidage (54a, 54b, 54c) de chaque bord latéral courbe étant positionnée dans ladite portion avant (48) dudit panneau de pare-soleil (46) et au moins l'une desdites languettes de guidage (54a, 54c) de chaque bord latéral courbe (52, 52) étant positionnée dans ladite portion arrière (50) dudit panneau de pare-soleil (46) ;
ladite au moins une languette de guidage (54a, 54c) positionnée dans ladite portion avant (48) dudit panneau de pare-soleil (46) et ladite au moins une languette de guidage (54a, 54c) positionnée dans ladite portion arrière (50) dudit panneau de pare-soleil (46) étant chacune d'une longueur suffisante pour venir en contact avec chaque surface de guidage parallèle (44, 44) de ladite paire de surfaces de guidage parallèles espacées (44, 44) pour fournir un ajustement à glissement de friction dans ladite paire de rails de guidage opposés (42, 42), **caractérisé en ce que** ladite pluralité de languettes de guidage (54a, 54c) de chaque bord latéral courbe (52, 52) comporte en outre une troisième languette de guidage (54b) positionnée le long dudit rayon de courbure et située entre ladite au moins une languette de guidage (54a, 54c) positionnée dans ladite portion avant (48) dudit panneau de pare-soleil (46) et ladite au moins une languette de guidage positionnée dans ladite portion arrière (50) dudit panneau de pare-soleil (46), ladite au moins une languette de guidage (54a) positionnée dans ladite portion avant (48) dudit panneau de pare-soleil (46) et ladite au moins une languette de guidage (54c) positionnée dans ladite portion arrière (50) dudit panneau de pare-soleil (46) étant pourvues d'une contre-dépouille (60) le long d'une portion dudit bord latéral courbe (52, 52), lesdites contre-dépouilles (60) améliorant la résilience et le mouvement de glissement de friction dudit panneau de pare-soleil (46) par rapport auxdits rails de guidage (42, 42).

2. Ensemble de pare-soleil selon la revendication 1, dans lequel ladite troisième languette de guidage (54b) de ladite pluralité de languettes de guidage (54a, 54b, 54c) de chaque bord latéral courbe (52, 52) a une épaisseur suffisante pour venir en contact avec chaque surface de guidage parallèle de ladite paire de surfaces de guidage parallèles espacées (44, 44).

3. Ensemble de pare-soleil selon la revendication 1 ou 2, dans lequel ladite portion arrière (50) dudit panneau de pare-soleil (46) se termine par un bord s'étendant vers le haut.

4. Ensemble de pare-soleil selon l'une quelconque des revendications 1 à 3, dans lequel chacun de ladite paire de rails de guidage opposés (42, 42) est substantiellement droit.

5. Ensemble de pare-soleil selon l'une quelconque des revendications 1 à 4, dans lequel chacun de ladite paire de rails de guidage opposés (42, 42) est substantiellement courbe le long d'un rayon de courbure.

6. Ensemble de pare-soleil selon la revendication 5, dans lequel ledit rayon de courbure de chacun de ladite paire de rails de guidage opposés (42, 42) est supérieur audit rayon de courbure de ladite pluralité de languettes de guidage (54a, 54b, 54c) de chacun de ladite paire de bords latéraux courbes (52, 52).

7. Ensemble de pare-soleil selon l'une quelconque des revendications 1 à 6, dans lequel ledit panneau de pare-soleil (46) est fabriqué à partir d'un matériau comprenant une résine thermoplastique choisie parmi les polyoléfines, les polyamides, les polyesters, les polyaryléthercétones, les polymères de polyoxyméthylène et des copolymères et terpolymères de ceux-ci.

8. Ensemble de pare-soleil selon l'une quelconque des revendications 1 à 6, dans lequel ledit panneau de pare-soleil (46) est fabriqué à partir d'un un polypropylène chargé de verre.
